# DEMANDE DE BREVET EUROPEEN

(11) **EP 0 577 441 A2**
(43) Date de publication de la demande: **05.01.1994**
(21) Numéro de dépôt: 93401013.3
(22) Date de dépôt: 20.04.1993
(51) Int. Cl.: G10L 3/00, H04R 25/00

(54) **Dispositif d'analyse de la parole et des phénomènes acoustiques**

(30) Priorité: 28.04.1992 FR 9205212
(71) Demandeur: S.P.I.C. FRANCE S.A., F-90400 Trevenans (FR)
(72) Inventeur: Dupret, Jean-Pierre, F-90400 Trevenans Nord (FR)
(74) Mandataire: Hirsch, Marc-Roger

(57) **Abrégé**

Le dispositif d'analyse de la parole et des phénomènes acoustiques selon l'invention comprend:
- des moyens d'entrée 10 d'un signal sonore, qui fournissent en sortie un signal analogique représentatif de ce signal sonore,
- des moyens de traitement 11 du signal analogique fourni en sortie par les moyens d'entrée;
- des moyens de sortie 9 du signal, qui reçoivent en entrée le signal traité par les moyens de traitement.

Dans ce système, les moyens de traitement du signal comprennent:
- au moins un convertisseur analogique-numérique 3
- des moyens numériques de traitement 4.1 à 4.N; 5.1 à 5.N; 6.1 à 6.N; 7; 20; 21; 22; 23 obtenu en sortie du convertisseur analogique-numérique, et
- au moins un convertisseur numérique-analogique 8, convertissant le signal numérique obtenu en sortie des moyens numériques de traitement.

De préférence, les moyens numériques de traitement du signal comprennent une pluralité de filtres numériques, une pluralité de dispositifs numériques de détection et une pluralité de dispositifs numériques de traitement.

L'invention est particulièrement adaptée à la réalisation de prothèses auditives.

## Description

La présente invention a pour objet un dispositif d'analyse de la parole et des phénomènes acoustiques.

Il existe déjà des dispositifs connus d'analyse de la parole et des phénomènes acoustiques. Ces dispositifs ont en particulier été utilisés pour des prothèses auditives.

De façon générale, les prothèses auditives classiques comportent un microphone d'entrée, des moyens d'amplification et un écouteur de sortie. L'amplification est réalisée dans tout le spectre de fréquences. Cela se révèle, d'une part, superflu car, pour chaque patient particulier, des zones spécifiques du spectre se trouvent mieux conservées et, d'autre part, éventuellement nuisible du fait qu'il n'existe pas, de ce fait, de différentiation entre les fréquences "utiles" et les autres.

Par ailleurs, il apparaît que, pour certaines oreilles pathologiques, les pertes auditives se traduisent par une incapacité de l'oreille non pas véritablement à "entendre", mais à analyser correctement le son émis. Les essais cliniques montrent, de plus, que cette incapacité d'analyse correcte est plus ou moins marquée selon les zones de fréquences considérées, et variable suivant le type et la forme de la perte auditive qui sont particuliers à chaque patient. Dans une zone auditive gravement atteinte, un signal sonore ayant des fréquences données peut être alors perçu comme un signal présentant des fréquences différentes et, par conséquent, le son "entendu" par le patient risque d'être différent du son émis. Par exemple, le patient entendra un "s" pour un "f", ou inversement. De ce fait, un signal sonore, même amplifié, risque d'être toujours aussi mal perçu par l'oreille pathologique qui, en quelque sorte, "déforme" le son émis quelle que soit l'intensité de celui-ci.

On a donc imaginé de décaler les fréquences du spectre sonore d'un nombre entier, au moins égal à un, d'octave(s). (Il est bien entendu que le terme "octave", tel qu'il est utilisé ici, représente l'intervalle de deux vibrations dont l'une a une fréquence double de l'autre). Les fréquences du signal peuvent alors se trouver dans une zone plus favorable, c'est-à-dire une zone auditive mieux conservée de l'oreille pathologique. En outre, les fréquences du signal étant décalées d'une octave, le son correspondant restera reconnaissable, même s'il est perçu comme étant plus grave, ou plus aigu.

Cependant, également dans ce cas, toutes les fréquences du spectre subissent ce décalage, ce qui, en définitive, entraîne des inconvénients analogues à ceux indiquées précédemment.

Il a donc été proposé de ne décaler ou d'amplifier le signal qu'autour de certaines fréquences, de façon à ne traiter le signal que dans certaines bandes de fréquences. Ceci permet en effet d'adapter le dispositif d'analyse à une prothèse auditive correspondant aux caractéristiques particulières d'un patient donné. Grâce à ces dispositifs connus, on obtient déjà des améliorations sensibles par rapport aux simples dispositifs décrits plus haut. Un exemple de ce type de dispositifs est décrit dans "les Cahiers de l'audition", vol. 5, n° 2, n° 94 de juin 1991. Ces dispositifs comprennent un microphone d'entrée, des moyens analogiques de traitement du signal ainsi qu'un écouteur en sortie. Les moyens analogiques travaillent en parallèle sur une partie du signal reçu et sont essentiellement constitués d'un filtre d'entrée et de moyens d'amplification ou de décalage en fréquence du signal filtré.

Ainsi, les moyens analogiques de traitement du signal décalent ou amplifient une bande de fréquence particulière. Le signal de sortie des moyens analogiques de traitement est ensuite additionné au signal non traité, puis l'ensemble est envoyé à l'écouteur de sortie.

Ces systèmes représentent un progrès très sensible par rapport aux systèmes antérieurs. Toutefois, ils présentent un certain nombre d'inconvénients. D'une part, ils ne permettent pas de reproduire les fonctionnalités des systèmes antérieurs et, par exemple, ne sont pas susceptibles d'amplifier un signal sur toute la bande d'audition, ou encore de traiter les bruits de fond. En effet, seule une bande de fréquence peut être traitée, par amplification ou décalage, et non pas l'ensemble du spectre. Comme le signal traité est ensuite additionné au signal d'entrée, les bruits de fond restent toujours présents dans le signal émis en sortie et ne peuvent être atténués ou supprimés.

D'autre part, ces systèmes ne permettent pas de mettre en oeuvre des traitements nécessaires pour certaines pathologies, ou augmentant la facilité de compréhension. Ainsi, ils ne peuvent pas utiliser toutes les connaissances sur la structure des sons, et sont limités à un traitement assez grossier. Ainsi, ils ne peuvent détecter certains types de sons, comme par exemple les bruits d'explosion, et ne peuvent pas non plus effectuer un traitement du temps. Autrement dit, il n'est pas possible avec ces dispositifs d'allonger les sons les plus difficiles à reconnaître, ce qui augmenterait l'intelligibilité du signal. De plus, ces dispositifs connus sont, de par leur construction, même limités à un seul traitement par filtre, sans qu'il ne soit possible d'opérer un choix de traitement en fonction par exemple du signal reçu.

La présente invention a pour objet un dispositif d'analyse de la parole et des phénomènes acoustiques, qui permet de pallier tous ces inconvénients de l'art antérieur et qui propose de multiples fonctionnalités nouvelles permettant un traitement rapide, efficace et complet des signaux reçus en entrée.

Le dispositif de la présente invention peut en particulier être employé dans les appareillages destinés à pallier les effets des surdités, ou dans les dispositifs d'amélioration de la compréhension en milieu bruité, pour les surdités, les enregistrements sonores. On peut l'utiliser dans les systèmes de reconnaissance automatique de la parole. Il est aussi d'un emploi particulièrement avantageux pour l'apprentissage des langues étrangères.
En somme, il est utilisable avec profit dans tous les systèmes de traitement de la parole et des phénomènes acoustiques, et en particulier dans ceux qui exploitent les calculateurs et dispositifs électroniques numériques actuels. Ceux-ci permettent en particulier un traitement rapide d'un grand nombre de données et sont aussi susceptibles d'être facilement miniaturisés.

La présente invention propose un dispositif d'analyse de la parole et des phénomènes acoustiques, comprenant:
- des moyens d'entrée d'un signal sonore, qui fournissent en sortie un signal analogique représentatif dudit signal sonore,
- des moyens de traitement dudit signal analogique fourni en sortie par lesdits moyens d'entrée;
- des moyens de sortie du signal, qui reçoivent en entrée le signal traité par les moyens de traitement,

et dans lequel lesdits moyens de traitement du signal comprennent:
- au moins un convertisseur analogique-numérique,
- des moyens numériques de traitement du signal numérique obtenu en sortie du convertisseur analogique-numérique, et
- au moins un convertisseur numérique-analogique, convertissant le signal numérique obtenu en sortie des moyens numériques de traitement.

Selon un mode de réalisation de la présente invention, les moyens numériques de traitement du signal comprennent une pluralité de filtres numériques.

Selon un autre mode de réalisation de la présente invention, les moyens numériques de traitement du signal comprennent une pluralité de dispositifs numériques de traitement du signal, qui reçoivent en entrée le signal numérique provenant du ou des convertisseurs analogique-numérique, ou du ou des filtres numériques.

Selon encore un mode de réalisation de la présente invention, les moyens numériques de traitement du signal comprennent en outre un ou plusieurs dispositifs numériques de détection qui reçoivent en entrée le signal numérique provenant du ou des convertisseurs analogique-numérique, ou du ou des filtres numériques, et qui détectent la présence ou l'absence d'un ou plusieurs phénomènes acoustiques.

Selon un autre mode de réalisation de la présente invention, les dispositifs numériques de détection commandent l'action desdits dispositifs numériques de traitement du signal en fonction de la présence ou l'absence du ou des phénomènes acoustiques détectés.

Selon encore un autre mode de réalisation de la présente invention, les filtres numériques comprennent des filtres passe-bas, des filtres passe-haut, des filtres passe-bande, des filtres détectant les transitions de fréquences montantes et descendantes.

Selon un mode de réalisation de la présente invention, les dispositifs numériques de traitement du signal exécutent sur les signaux reçus des transitions en fréquence par multiplication ou division des fréquences par une valeur donnée, des amplifications, des suppressions de parties du signal ou des variations de durée des différents signaux.

Selon encore un mode de réalisation de la présente invention, les dispositifs numériques de détection effectuent une mesure de la durée des phénomènes acoustiques, de leur amplitude ou de leur fréquence.

Selon encore un autre mode de réalisation de la présente invention, les moyens d'entrée et et lesdits moyens de sortie comprennent chacun au moins un transducteur.

Enfin, l'invention concerne également l'utilisation d'un dispositif pour la réalisation de prothèses auditives.

Les avantages et caractéristiques de la présente invention ressortiront mieux de la description suivante, donnée uniquement à titre d'exemple, et en regard des figures annexées où:
- la figure 1 est un schéma synoptique d'un premier mode de réalisation de l'invention;
- la figure 2 est un schéma synoptique des moyens numériques de traitement du signal, dans un autre mode de réalisation.

Pour une meilleure compréhension de l'invention, on commence ci-dessous par décrire les différents phénomènes acoustiques qui composent la parole et que l'invention est susceptible de traiter. Ces phénomènes acoustiques peuvent grossièrement être séparés en plusieurs classes.
On rencontre tout d'abord des bruits, d'une durée variable, qui peut être très courte ou s'étendre sur quelques centi-secondes.

Il y a ensuite des silences, de durée variable.

On trouve aussi des rapports entre les formants, qui sont des bandes de fréquence renforcées caractéristiques des voyelles.

La parole comprend en outre des transitions phonétiques au sein de la syllabe entre consonnes et voyelles. Dans le cas de deux transitions distinctes pour la même syllabe, les deux fréquences centrales peuvent au cours du temps se rapprocher ou s'éloigner, ou bien leur écart peut rester stable.

Enfin, l'analyse de la parole montre que les sons émis sont généralement constitués de plusieurs composantes appelées formants. Chacun de ces formants est centré sur une composante de fréquence, dont les rapports sont relativement constants.

Bien entendu, cette description des phénomènes acoustiques de la parole n'est qu'un tableau rapide assez grossier des éléments nécessaires à la compréhension de l'invention.

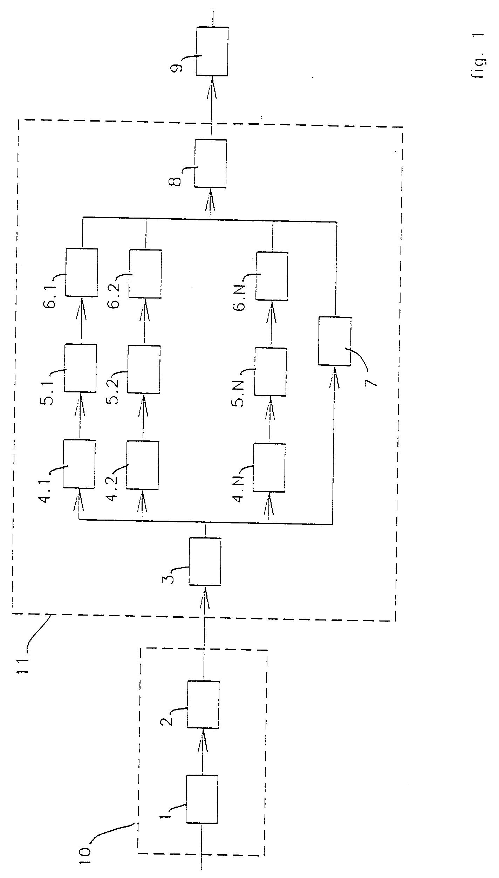

La figure 1 montre un schéma synoptique d'un mode de réalisation de l'invention, dans un cadre très général, sur lequel on a représenté symboliquement les différents éléments d'un dispositif selon l'invention.

Le dispositif selon l'invention, dans le mode de réalisation de la figure 1, comprend des moyens d'entrée 10 constitués d'un transducteur électromécanique 1 et d'un pré-amplificateur 2 amplifiant les signaux fournis par le transducteur électromécanique. Il s'agit là d'un exemple courant, susceptible d'application entre autres au cas de l'utilisation du dispositif dans une prothèse auditive. Bien entendu, les moyens d'entrée 10 peuvent prendre une autre forme selon le type et la nature des phénomènes acoustiques à analyser. Par exemple, dans le cas d'un signal préenregistré sur une bande magnétique, les moyens 10 peuvent consister en un dispositif de lecture de bande magnétique.

Le dispositif de la figure 1 comprend des moyens de traitement 11 du signal analogique fourni en sortie par les moyens d'entrée 10.

Il comprend enfin des moyens de sortie 9 du signal qui reçoivent le signal traité par lesdits moyens de traitement. Dans le cas d'une prothèse auditive, ces moyens de sortie 9 sont typiquement constitués par un second transducteur électromécanique qui transforme en signaux sonores les signaux analogiques qu'il reçoit.

on détaille maintenant la structure des moyens de traitement du signal 11. Les moyens de traitement du signal 11 comprennent en premier lieu un convertisseur analogique numérique 3 (CAN). Le CAN 3 numérise les signaux analogiques fournis par les moyens d'entrée 10. Les signaux numériques émis par le CAN 3 sont reçus par des moyens numériques de traitement du signal, qui comprennent typiquement:
- une pluralité de filtres numériques 4.1 à 4.N,
- une pluralité de dispositifs numériques de détection 5.1 à 5.N,
- une pluralité de dispositifs numériques de traitement du signal 6.1 à 6.N.

Dans le mode de réalisation de la figure 1, chacun des filtres numériques 4.i (1 ≦ i ≦ N) est associé à un dispositif numérique de détection 5.i et à un dispositif numérique de traitement du signal 6.i. Comme on le verra par la suite, on peut choisir une disposition différente.

Les moyens numériques de traitement du signal comprennent un amplificateur 7, permettant d'amplifier l'ensemble du signal reçu; ils comprennent aussi un additionneur non représenté qui additionne les signaux fournis par les dispositifs de traitement du signal 6.1 à 6.N et qui fournir le signal additionné à un convertisseur numérique analogique 8 (CNA).

Les moyens numériques de traitement du signal 11 permettent d'effectuer sur le signal numérisé les traitements d'analyse de la parole nécessaires. Les filtres 4.1 à 4.N, associés aux dispositifs de détection 5.1 à 5.N permettent de détecter la présence ou l'absence de phénomènes acoustiques, qui sont ensuite traités par les dispositifs 6.1 à 6.N. A titre d'exemple, les filtres 4.1 à 4.N peuvent comprendre:
- un filtre pour détecter le fondamental laryngé et le voisement (filtrage passe bas et/ou passe-bande pour détecter les fréquences fondamentales),
- des filtres correspondant aux différents formants de différents sons,
- des filtres de nasalité pour détecter la nasalité,
- des filtres pour détecter les bruits d'explosion (filtrage passe-bande et sélection des bruits courts),
- des filtres pour détecter les bruits de friction (sons du type f, v, s...),
- des filtres pour détecter les bruits de voisement (sons du type v, s, z, b, d, g),
- des filtres détectant des transitions de fréquences montantes,
- des filtres détectant des transitions de fréquences descendantes, etc.

Ces filtres sont associés aux dispositifs de détection 5.1 à 5.N qui, dans les bandes de fréquences obtenues en sortie des filtres 4.1 à 4.N, effectuent la détection des différents phénomènes acoustiques. Par exemple, si l'on désire sur la branche i (filtre 4.i, dispositif de détection 5.i et dispositif de traitement 6.i) traiter un son constitué de trois formants centrés sur des fréquences f₁, f₂ et f₃, le filtre 4.i sera un filtre passe-bande avec une valeur de gain non nulle autour des fréquences f₁, f₂ et f₃. Le dispositif de détection 5.i mesurera l'amplitude du signal filtré dans les trois bandes de fréquence correspondant aux 3 formants, ce qui permet, en fonction des amplitudes, de déterminer si on a ou non le son en question. En fonction de la détermination effectuée par le dispositif de détection, le dispositif de traitement 6.i effectue ou n'effectue pas le traitement du son, qui peut par exemple consister en un décalage des fréquences.

Bien entendu, le cas décrit ci-dessus est celui de la détection d'un son constitué de trois formants. Mais les dispositifs de détection peuvent servir à mesurer non seulement l'amplitude du son, mais aussi bien les fréquences des pics d'amplitude, la durée de certains sons ou toute autre mesure analogue permettant de reconnaître certains sons. Par exemple, un bruit d'explosion est un bruit très court dans des fréquences données. Pour supprimer de tels bruits, on filtre avec un filtre passe-bande, on mesure la durée du son, c'est-à-dire la durée pendant laquelle son amplitude dépasse une valeur seuil et, si cette durée est inférieure à une valeur donnée, on considère qu'il y a un bruit d'explosion. Dans un tel cas, le dispositif numérique de traitement est un filtre de gain nul dans la bande du bruit d'explosion.

Le dispositif de détection peut aussi détecter des fréquences données par échantillonnage temporel, ou encore mesurer les durée des différents phénomènes (silences, phénomènes stables comme les accords ou phénomènes instables comme les transitions phonétiques).

Ainsi, dans chacune des "branches" 1 à N du dispositif de la figure 1, on peut effectuer un traitement différent du signal, par exemple sur un son particulier, ou dans une bande de fréquence donnée.

Dans le mode de réalisation de la figure 1, on a en outre prévu un amplificateur 7 qui est disposé entre le CAN 3 et le CNA 8 et qui permet une amplification du signal reçu sur l'ensemble du spectre. Le cas échéant, cet amplificateur 7 peut être utilisé s'il est utile d'amplifier tous les sons reçus.

Les signaux numériques traités dans les branches 1 à N et, le cas échéant, les signaux amplifiés par l'amplificateur 7 sont ensuite additionnés, puis transmis au CNA 8, qui les convertit en un signal analogique transmis aux moyens de sortie 9.

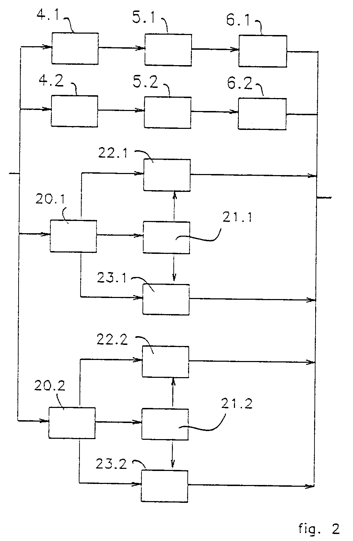

La figure 2 montre un autre mode de réalisation des moyens numériques de traitement du signal. Sur la figure 2, on a représenté uniquement les moyens numériques qui reçoivent le signal fourni par un CAN tel que celui représenté sur la figure 1 sous la référence 3, et qui transmettent un signal traité à un CNA tel que celui représenté sous la référence 8 à la figure 1.

Les moyens numériques représentés à la figure 2 comprennent des filtres 4.1 et 4.2, des dispositifs numériques de détection 5.1 et 5.2 et des dispositifs numériques de traitement 6.1 et 6.2 du type de ceux de la figure 1 et référencés sous des numéros identiques. Ils comprennent en outre un filtre 20.1 (resp. 20.2) dont la sortie est relié à un dispositif numérique de détection 21.1 (resp. 21.2) et à des dispositifs numériques de traitement 22.1 et 23.1 (resp. 22.2 et 23.2). Par ailleurs, le dispositif numérique de détection 21.1 (resp. 21.2) est relié aux dispositifs numériques de traitement 22.1 et 23.1 (resp. 22.2 et 23.2) qu'il commande. Lorsqu'un signal numérique arrive dans les moyens numériques de traitement du signal représentés à la figure 2, il est filtré par les filtres numériques 20.1 et 20.2. Les signaux filtrés sont transmis aux dispositifs de détection 21.1 et 21.2. Ceux-ci, en fonction des résultats déterminés, agissent sur les dispositifs numériques de traitement 22.1, 23.1 et 22.2, 23.2 de façon à choisir comment le signal filtré doit être traité.

Ainsi, dans un mode de réalisation tel que celui de la figure 2, on peut choisir entre des traitements alternatifs du signal numérique à appliquer à un signal filtré. Par exemple, on peut détecter un son constitué de 3 formants et effectuer sur deux d'entre eux une multiplication fréquentielle en amplifiant, par ailleurs, le troisième.

Le dispositif selon l'invention permet donc un traitement du signal reçu par les moyens d'entrée, qui peut être totalement différent pour les différents phénomènes acoustiques qui composent le signal. Certains phénomènes parasites peuvent être simplement supprimés. Par exemple, on peut être amené à vouloir supprimer des bruits parasites, de nature connues à l'avance, ou identifiés par des caractéristiques mesurées dans les dispositifs numériques de détection. D'autres phénomènes peuvent être amplifiés, c'est-à-dire que l'on désire renforcer leur amplitude relative par rapport au reste du signal. Ainsi, dans le cas d'une légère surdité dans une bande réduite, il est intéressant de renforcer l'amplitude relative des sons perçus dans cette bande de fréquence. Si l'on est en présence d'une surdité dans une bande étendue, il peut être intéressant d'utiliser un amplificateur du type de celui représenté sur la figure 1 sous la référence 7.

Il est aussi parfois utile d'effectuer des décalages en fréquences sur certains sons. A cet effet, on peut multiplier ou diviser certaines fréquences par des coefficients entiers ou non-entiers. Ceci permet, pour la parole, de conserver l'intelligibilité des sons, dont l'oreille ne perçoit qu'un décalage en fréquence. On crée ainsi des sons multiples, par multiplication ou division par des coefficients, qui peuvent être différents pour la multiplication et la division ou selon les phénomènes traités. Une fois produits, on peut vouloir traiter ces nouveaux sons, en les amplifiant.

Enfin, un traitement intéressant consiste à faire varier la durée de certains des phénomènes qui peut être mesurée dans les dispositifs numériques de détection, pour les allonger ou les raccourcir. Par exemple, pour améliorer l'intelligibilité de la parole, on peut raccourcir la durée des voyelles facilement reconnaissables, et augmenter celle des transitions phonétiques.

La mise en oeuvre du dispositif selon l'invention pour une prothèse auditive est la suivante. Dans un premier temps, on relève un audiogramme du patient; ensuite, l'audioprothésiste choisit, en fonction de l'audiogramme relevé, les traitements à appliquer au patient. Les traitements possibles selon l'invention comprennent entre autres:
- l'amplification de tout le signal,
- l'amplification sélective de certaines bandes de signal,
- le traitement de suppression des bruits de fond,
- le traitement spécifique des sons de la parole, par amplification, multiplication ou division fréquentielle, allongement et raccourcissement du temps, avec des traitements différents selon les phénomènes ou les parties de phénomènes sonores détectés.

On peut avantageusement détecter le voisement, les bruits d'explosion ou de friction, les fréquences montantes ou descendantes. Sur un son constitué de plusieurs formants, on peut détecter le fondamental et les autres formants; on peut aussi chercher à repérer les fréquences montantes ou descendantes sur les 2ème ou 3ème formants. Bien évidemment, comme on l'a vu plus haut, le traitement de chacun de ces phénomènes peut être différent, selon les besoins définis par l'audioprothésiste.

Une fois défini le traitement nécessaire pour le patient, le dispositif selon l'invention est réalisé à l'aide de composants électroniques qui peuvent être de type connu en soi, ou qui peuvent être développés spécialement à cet usage. Les moyens d'entrée et de sortie peuvent être réalisés à l'aide de transducteurs de type connu; de nombreux convertisseurs analogique-numérique ou numérique-analogique sont disponibles sur le marché; les moyens numériques de traitement du signal peuvent avantageusement être regroupés sur une puce, éventuellement associée à une mémoire comprenant les caractéristiques des différents filtres, par exemple une mémoire de type EPROM. Ceux-ci sont avantageusement des filtres à réponse impulsionnelle finie, mais ils peuvent aussi être réalisés d'une autre façon.

Le dispositif de la présente invention peut aussi être simulé à l'aide d'un micro-ordinateur couplé aux moyens d'entrée et de sortie. De la sorte, il est possible de vérifier l'adaptation du dispositif selon l'invention avant de l'implanter sur une mémoire et une puce.

Le dispositif selon la présente invention a été décrit en particulier dans son utilisation pour une prothèse auditive. Il est aussi susceptible d'autres utilisations; par exemple, il est tout à fait utile pour l'enseignement des langues étrangères. Il permet en effet d'accentuer les sons les plus difficiles à prononcer pour celui qui apprend la langue. De ce fait, ces sons, amplifiés ou allongés, ressortent mieux et l'apprentissage est plus facile.

On a décrit ci-dessus le cas où l'ensemble du traitement du signal était réalisé par des moyens numériques de traitement. Il est bien évident qu'une partie de ce traitement des signaux, entre les moyens d'entrée et les moyens de sortie, peut être réalisée par des moyens analogiques, disposés en parallèle auxdits moyens numériques. Ainsi, il est avantageusement possible d'utiliser, pour ceux des traitements du signal existant dans l'art antérieur, des composants disponibles sur le marché. Par exemple, l'amplification du signal sur tout le spectre audible peut, le cas échéant, être réalisé facilement par un amplificateur analogique.

Bien entendu, la présente invention n'est pas limitée aux modes de réalisation décrits et représentés mais elle est susceptible de nombreuses variantes accessibles à l'homme de l'art sans que l'on ne s'écarte de l'esprit de l'invention.

## Revendications

**1.-** Dispositif d'analyse de la parole et des phénomènes acoustiques, comprenant:
- des moyens d'entrée (10) d'un signal sonore, qui fournissent en sortie un signal analogique représentatif dudit signal sonore,
- des moyens de traitement (11) dudit signal analogique fourni en sortie par lesdits moyens d'entrée;
- des moyens de sortie (9) du signal, qui reçoivent en entrée le signal traité par lesdits moyens de traitement,
lesdits moyens de traitement du signal comprenant:
- au moins un convertisseur analogique-numérique (3),
- des moyens numériques de traitement (4.1 à 4.N; 5.1 à 5.N; 6.1 à 6.N; 7) du signal numérique obtenu en sortie dudit convertisseur analogique-numérique (3), et
- au moins un convertisseur numérique-analogique (8), convertissant le signal numérique obtenu en sortie desdits moyens numériques de traitement,
caractérisé en ce que lesdits moyens numériques de traitement du signal comprennent un ou une pluralité de dispositifs numériques de détection (5.1 à 5.N; 21.1; 21.2) et de dispositifs numériques de traitement du signal (22.1, 23.1; 22.2, 23.2), et en ce que le ou lesdits dispositifs numériques de détection (5.1 à 5.N; 21.1; 21.2) détectent la présence ou l'absence d'un ou plusieurs phénomènes acoustiques et commandent l'action desdits dispositifs numériques de traitement du signal (22.1, 23.1; 22.2, 23.2) en fonction de la présence ou de l'absence du ou desdits phénomènes acoustiques détectés.

**2.-** Dispositif selon la revendication 1, caractérisé en ce que lesdits moyens numériques de traitement du signal comprennent une pluralité de filtres numériques (4.1 à 4.N; 20.1; 20.2)

**3.-** Dispositif selon la revendication 1 ou 2 caractérisé en ce que lesdits moyens numériques de traitement du signal comprennent une pluralité de dispositifs numériques de traitement (6.1 à 6.N; 22.1, 22.2; 23.1, 23.2) du signal, qui reçoivent en entrée le signal numérique provenant du ou desdits convertisseurs analogique-numérique, ou du ou desdits filtres numériques.

**4.-** Dispositif selon l'une quelconque des revendications 1 à 3, caractérisé en ce que le ou lesdits dispositifs numériques de détection (5.1 à 5.N; 21.1; 21.2) reçoivent en entrée le signal numérique provenant du ou desdits convertisseurs analogique-numérique, ou du ou desdits filtres numériques, et détectent la présence ou l'absence d'un ou plusieurs phénomènes acoustiques

**5.-** Dispositif selon la revendication 4, caractérisé en ce que les dispositifs numériques de détection (21.1; 21.2) commandent l'action desdits dispositifs numériques de traitement du signal (22.1, 23.1; 22.2, 23.2) en fonction de la présence ou de l'absence du ou desdits phénomènes acoustiques détectés.

**6.-** Dispositif selon l'une quelconque des revendications 2 à 5, caractérisé en ce lesdits filtres numériques (4.1 à 4.N; 20.1; 20.2) comprennent des filtres passe-bas, des filtres passe-haut, des filtres passe-bande, des filtres détectant les transitions de fréquences montantes et descendantes.

**7.-** Dispositif selon l'une quelconque des revendications 3 à 6, caractérisé en ce lesdits dispositifs numériques de traitement du signal (6.1 à 6.N; 22.2, 22.2; 23.1, 23.2) exécutent sur les signaux reçus des transitions en fréquence par multiplication ou division des fréquences par une valeur donnée, des amplifications, des suppressions de parties du signal ou des variations de durée des différents signaux.

**8.-** Dispositif selon l'une quelconque des revendications 4 à 7, caractérisé en ce lesdits dispositifs numériques de détection (5.1 à 5.N; 21.1; 21.2) effectuent une mesure de la durée des phénomènes acoustiques, de leur amplitude ou de leur fréquence.

**9.-** Dispositif selon l'une quelconque des revendications précédentes, caractérisé en ce que lesdits moyens d'entrée (10) et et lesdits moyens de sortie (9) comprennent chacun au moins un transducteur (1).

**10.-** Utilisation d'un dispositif selon l'une quelconque des revendications précédentes pour la réalisation de prothèses auditives.
